# EUROPÄISCHE PATENTSCHRIFT

(11) **EP 2 062 643 B1**
(45) Veröffentlichungstag und Bekanntmachung des Hinweises auf die Patenterteilung: **18.01.2012**
(21) Anmeldenummer: 07022814.3
(22) Anmeldetag: 24.11.2007
(51) Int. Cl.: B01L 3/00, G01N 35/00

(54) **Analysesystem und Verfahren zur Analyse einer Körperflüssigkeitsprobe auf einen darin enthaltenen Analyten**
Analysis system and method for analysing a bodily fluid sample on an analyte contained therein
Système d'analyse et procédé d'analyse d'un échantillon de liquide corporel sur un analyte contenu dans celui-ci

(43) Veröffentlichungstag der Anmeldung: 27.05.2009
(73) Patentinhaber: Roche Diagnostics GmbH, 68305 Mannheim (DE); F.Hoffmann-La Roche AG, 4070 Basel (CH)
(72) Erfinder: Degenhardt, Volker, 64646 Heppenheim (DE)
(74) Vertreter: Petirsch, Markus

(56) Entgegenhaltungen:
- WO-A-2007/005076
- WO-A-2007/106013
- US-A- 4 713 974
- US-A1- 2002 001 848

## Beschreibung

Die Erfindung betrifft ein Analysesystem und ein Verfahren, das mit dem System durchgeführt werden kann. Das System und das Verfahren dienen zur Analyse einer Körperflüssigkeitsprobe auf einen darin enthaltenen Analyten für medizinische Zwecke.

Im Bereich der medizinischen Analytik kann man zwei Klassen von Analysesystemen unterscheiden:
- Zum einen Analysesysteme, die im wesentlichen mit "Nassreagenzien" arbeiten, wobei die zur Durchführung einer Analyse notwendigen Schritte (z.B. Dosieren von Probe und Reagenz in ein Reagenzgefäß, Mischen sowie Messen und Auswerten einer für das gewünschte analytische Ergebnis (Analyse resultat) charakteristik schen Messgröße) mit technisch aufwendigen, großen, netzbetriebenen Analysegeräten durchgeführt werden, die die erforderlichen vielfältigen Bewegungen der beteiligten Elemente ermöglichen. Diese Klasse von Analysesystem wird vor allem in großen medizinisch-analytischen Labors eingesetzt.
- Zum anderen Systeme, die mit "Trockenreagenzien" arbeiten, wobei diese Reagenzien üblicherweise in ein Testelement integriert sind, das beispielsweise als "Teststreifen" ausgebildet sein kann. Bei der Anwendung dieser Systeme löst die flüssige Probe die Reagenzien in dem Testelement, und die Reaktion von Probe und Reagenzien führt zur Änderung einer Messgröße, die an dem Testelement selbst vermessen werden kann. Gebräuchlich sind vor allem optisch auswertbare (insbesondere colorimetrische) Analysesysteme, bei denen die Messgröße eine Farbänderung oder sonstige optisch messbare Größe ist, sowie elektrochemische Systeme, bei denen in einer Messzone des Testelementes mittels in der Messzone vorhandener Elektroden eine für die Analyse charakteristische elektrische Messgröße, insbesondere ein elektrischer Strom bei Anlegen einer definierten Spannung, gemessen werden kann.

Die Auswertegeräte der "trockenchemischen" Analysesysteme sind meist kompakt, tragbar und batteriebetrieben. Die Systeme werden für dezentrale Analysen, beispielsweise bei niedergelassenen Ärzten, auf den Stationen der Krankenhäuser und im sogenannten "Home-Monitoring" bei der Überwachung von medizinisch-analytischen Parametern durch den Patienten selbst (insbesondere Blutglucoseanalyse durch Diabetiker) eingesetzt.

Bei Nassanalysesystemen ermöglichen die leistungsfähigen Auswertegeräte die Durchführung aufwendiger mehrstufiger Reaktionssequenzen ("Testprotokolle"). Zum Beispiel bedingen immunchemische Analysen vielfach einen mehrstufigen Reaktionsablauf, bei dem eine "bound/free-Trennung" (nachfolgend "b/f-Trennung"), also eine Trennung einer gebundenen und einer freien Phase, notwendig ist. Gemäß einem Testprotokoll kann beispielsweise zunächst die Probe durch eine poröse feste Matrix transportiert werden, welche ein spezifisches Bindungsreagenz für den Analyten enthält. Anschließend lässt man ein Markierungsreagenz durch die poröse Matrix strömen, um den gebundenen Analyten zu markieren und dessen Nachweis zu ermöglichen. Um eine genaue Analyse zu erreichen, muss zuvor ein Waschschritt durchgeführt werden, bei dem nichtgebundenes Markierungsreagenz vollständig entfernt wird. Es sind zahlreiche Testprotokolle zur Bestimmung einer Vielzahl von Analyten bekannt, die sich in vielfältiger Weise unterscheiden, denen aber gemeinsam ist, dass sie eine aufwendige Handhabung mit mehreren Reaktionsstufen bedingen, wobei insbesondere auch eine b/f-Trennung notwendig sein kann.

Teststreifen und ähnliche Analyseelemente ermöglichen normalerweise keinen kontrollierten mehrstufigen Reaktionsablauf. Zwar sind teststreifenartige Testelemente bekannt, die neben der Bevorratung von Reagenzien in getrockneter Form weitere Funktionen, beispielsweise die Abtrennung der roten Blutkörperchen aus Vollblut, erlauben. Eine genaue Steuerung der zeitlichen Abfolge von einzelnen Reaktionsschritten ermöglichen sie jedoch normalerweise nicht. Nasschemische Laborsysteme bieten diese Möglichkeiten, sind aber für viele Anwendungsfälle zu groß, zu teuer und zu aufwendig in der Handhabung.

Um diese Lücke zu schließen, wurden Analysesysteme vorgeschlagen, die mit Testelementen arbeiten, welche so ausgebildet sind, dass darin mindestens ein extern (d.h. mittels eines Elementes außerhalb des Testelementes selbst) gesteuerter Flüssigkeitstransportschritt stattfindet ("steuerbare Testelement"). Die externe Steuerung kann auf der Anwendung von Druckunterschieden (Überdruck oder Unterdruck) oder auf der Änderung von Kraftwirkungen (z.B. Änderung der Wirkrichtung der Schwerkraft durch Lageänderung des Testelementes oder durch Beschleunigungskräfte) basieren. Besonders häufig erfolgt die externe Steuerung durch Zentrifugalkräfte, die auf ein rotierendes Testelement, abhängig von der Geschwindigkeit der Rotation, einwirken.

Steuerbare Testelemente haben üblicherweise ein Gehäuse, das aus einem formstabilen Kunststoffmaterial besteht und einen von dem Gehäuse umschlossenen Probenanalysekanal, der vielfach aus einer Aufeinanderfolge mehrerer Kanalabschnitte und dazwischenliegenden im Vergleich zu den Kanalabschnitten erweiterten Kammern besteht. Die Struktur des Probenanalysekanals mit seinen Kanalabschnitten und Kammern wird dabei durch eine Profilierung der Kunststoffteile definiert, wobei diese Profilierung durch Spritzgießtechniken oder Heißpräge erzeugt sein kann, in neuerer Zeit aber auch zunehmend Mikrostrukturen Verwendung finden, die durch Lithographieverfahren erzeugt werden.

Analysesysteme mit steuerbaren Testelementen sind beispielsweise aus folgenden Publikationen bekannt:
US-Patent 4,456,581
US-Patent 4,580,896
US-Patent 4,814,144
US-Patent 6,030,581
US-A 2004/0265171

Analysesysteme mit steuerbaren Testelementen ermöglichen die Miniaturisierung von Tests, die bisher nur mit großen Laborsystem durchgeführt werden konnten. Außerdem ermöglichen sie die Parallelisierung von Vorgängen durch wiederholtes Aufbringen identischer Strukturen für die parallele Abarbeitung ähnlicher Analysen aus einer Probe bzw. identischer Analysen aus unterschiedlichen Proben. Ein weiterer Vorteil ist darin zu sehen, dass die Testelemente in der Regel mittels etablierter Herstellungsverfahren hergestellt und auch mittels bekannter Auswerteverfahren gemessen und ausgewertet werden können. Auch bei den chemischen und biochemischen Komponenten solcher Testelemente kann meist auf bekannte Verfahren und Produkte zurückgegriffen werden.

Trotz dieser Vorteile besteht weiterer Verbesserungsbedarf. Insbesondere sind Analysesysteme, die mit steuerbaren Testelementen arbeiten, noch zu groß. Möglichst kompakte Abmessungen sind für viele Anwendungszwecke von großer praktischer Bedeutung.

Auf dieser Grundlage liegt der Erfindung die Aufgabe zugrunde, ein Analysesystem mit steuerbaren Testelementen zur Verfügung zu stellen, das sich durch eine kompakte und einfache Bauweise und durch eine hohe Bedienerfreundlichkeit auszeichnet.

Gelöst wird diese Aufgabe durch ein Analysesystem zur Analyse einer Körperflüssigkeitsprobe auf einen darin enthaltenen Analyten mit den Merkmalen des Anspruchs 1, sowie durch ein Testelement mit den Merkmalen des Anspruchs 14 und ein Verfahren mit den Merkmalen des Anspruchs 15.

Das in den Ansprüchen verwendete Wort "ein" ist als unbestimmter Artikel, nicht als Zahlwort, zu verstehen. Selbstverständlich können jeweils mehrere der in den Ansprüchen definierten Elemente des Erfindungsgegenstandes vorhanden sein. Beispielsweise können die Testelemente einen oder mehrere Probenanalysekanäle und das Auswertegerät kann eine oder mehrere Dosierstationen aufweisen.

Das erfindungsgemäße Analysesystem umfasst Testelemente und ein Auswertegerät mit einer Dosierstation und mit einer Messstation. Die Testelemente weisen ein Gehäuse und (mindestens) einen von dem Gehäuse umschlossenen Probenanalysekanal auf, der an seinem Anfang eine Probenzugabeöffnung und an seinem Ende eine oder mehrere Messzonen einschließt.

Mittels der Dosierstation des Auswertegerätes wird eine Flüssigkeit in ein Testelement dosiert. Die Dosierstation weist üblicherweise eine Dosierpumpe, zum Beispiel eine Kolbenpumpe, und ein Röhrchen zum Einspritzen der Flüssigkeit auf, das auch als Dosiemadel bezeichnet wird. Die Flüssigkeit kann insbesondere eine für die Durchführung der Reaktion notwendige Flüssigkeit, beispielsweise eine Reagenzlösung, eine Waschlösung, ein Verdünnungspuffer oder eine Pufferlösung sein. Auch die zu untersuchende Körperflüssigkeitsprobe kann mittels der Dosierstation dosiert werden, vorzugsweise wird sie jedoch manuell, zum Beispiel mittels einer Handpipette oder Spritze, zugeführt.

Die Flüssigkeit kann in die Probenzugabeöffnung des Testelementes oder in eine oder mehrere andere (zusätzliche) Zugabeöffnungen des Testelements gegeben werden. Mittels der Messstation wird eine für das Analyseresultat charakteristische Messgröße an der Messzone des Testelements gemessen, wobei es sich in einer Messposition befindet. Vorzugsweise stimmt die Messposition mit der Probenaufgabeposition des Testelementes überein, in bestimmten Anwendungsfällen kann das Testelement jedoch auch zwischen Probenaufgabe und Messung bewegt werden, so dass beide Positionen verschieden sind.

Die Testelemente sind derart ausgebildet, dass eine durch eine Probenzugabeöffnung zugeführte Körperflüssigkeitsprobe mit einem Reagenzsystem reagiert, das in dem Probenanalysekanal vorhanden ist. Die Körperflüssigkeitsprobe ist eine Flüssigkeit des Körpers, wie beispielsweise Blut, oder eine Flüssigkeitsprobe, in der Stoffe des (menschlichen) Körpers, wie beispielsweise Gewebestücke, Stuhl oder Sputum, gelöst sind. Die Reaktion der Körperflüssigkeitsprobe mit dem Reagenzsystem führt zu einer Änderung der für das Analyseresultat charakteristischen Messgröße.

Die Testelemente schließen eine von der Probenzugabeöffnung verschiedene Spülflüssigkeitszugabeöffnung und eine Spülflüssigkeitssammelkammer ein, die über einen Spülflüssigkeitskanal in Fluidverbindung miteinander stehen. Der Spülflüssigkeitskanal und der Probenanalysekanal sind derart voneinander verschieden, dass eine durch den Spülflüssigkeitskanal strömende Flüssigkeit nicht in die Messzone des Probenanalysekanals gelangt.

Vor dem Dosieren der Flüssigkeiten aus der Dosierstation in eine Aufgabeöffnung des Testelementes ist es üblich, eine Spülflüssigkeit durch die Dosierstation, insbesondere deren Dosiemadel, zu leiten. Dadurch wird gewährleistet, dass eventuell vorhandene Luft entweicht und es bei der nachfolgenden Dosierung nicht zu Unterdosierungen kommt. Insbesondere in längeren Benutzungspausen können sich Luftblasen bilden oder durch Austrocknung feste Teilchen, wie z.B. Salze, ablagern. Zugleich hat das Spülen auch eine Reinigungswirkung. Ein derartiges vorbereitendes Spülen wird in der Fachwelt als "Priming" bezeichnet und wird in der medizinischen Diagnostik bei jeder Form der Flüssigkeitszugabe (Dispensieren, Pipettieren oder Dilluieren) angewandt.

Die Spülflüssigkeit wird aus einem Vorratsbehälter des Auswertegerätes entnommen, der Dosiereinrichtung zugeführt, in einem Spülflüssigkeitsbehälter in dem Auswertegerät gesammelt und entsorgt. Eine für die Entsorgung der Spülflüssigkeit in einem geräteseitigen Sammelbehälter geeignete Konstruktion ist beispielsweise aus der US 4,713,974 bekannt.

Im Rahmen der Erfindung wurde festgestellt, dass das Analysesystem deutlich kompakter und einfacher aufgebaut werden kann, wenn die Spülflüssigkeit nicht in einen Sammelbehälter des Auswertegerätes entsorgt, sondern direkt in eine spezielle Kanalstruktur des Testelementes gegeben wird, die nachfolgend auch als "Primingstruktur" bezeichnet wird.

Die Tatsache, dass die Spülflüssigkeit (die man auch als Primingflüssigkeit bezeichnen kann) bisher immer in einem geräteseitigen Sammelbehälter gesammelt wurde, ist dadurch zu erklären, dass das Priming eine Gerätefunktion ist, die völlig unabhängig ist von den Analyseschritten, die mittels des Testelementes durchgeführt werden. Das Testelement wird also zweckentfremdet (nicht seinem ursprünglichen Zweck entsprechend) eingesetzt. Im Rahmen der Erfindung wurde festgestellt, dass diese zweckentfrerndete Verwendung des Analyseelementes möglich und vorteilhaft ist.

Eine verminderte Baugröße des Gerätes ergibt sich daraus, dass kein Platzbedarf für den Sammelbehälter im Gerät und keine Fluidstrukturen oder Fluidleitungen für den Transport der Spülflüssigkeit in den Abfallbehälter vorgesehen werden müssen. Damit wird nicht nur Platz gespart, sondern auch Kosten bei der Herstellung und beim Service des Auswertegerätes.

Darüber hinaus entfällt eine Überwachung des Füllstandes des Sammelbehälters, um einen Überlauf zu vermeiden. Zum einen kann so auf eine Überwachungselektronik verzichtet werden, die bei Überschreitung eines Grenzvolumens in dem Sammelbehälter eine weitere Verarbeitung mit dem Analysesystem verhindert. Zum anderen führt der Verzicht auf einen geräteseitigen Sammelbehälter zu einem erhöhten Bedienkomfort für den Benutzer, da ein Entleeren des Sammelbehälters durch den Benutzer entfällt. Vielmehr wird der auf dem Testelement angeordnete Sammelbehälter automatisch mit der Entsorgung des benutzten Testelementes entsorgt.

Ein weiterer Vorteil des erfindungsgemäßen Analysesystems mit einer Primingstruktur in dem Testelement besteht darin, dass Probleme durch alternde Abfallmengen in dem Sammelbehälter des Auswertegeräts vermieden werden.

Unter dem Begriff "Spülflüssigkeit" wird jede Flüssigkeit verstanden, die geeignet ist, die Dosierstation, insbesondere deren Nadel, zu spülen. Die Spülflüssigkeit kann darüber hinaus noch andere Zwecke erfüllen. Sie kann gleichzeitig Waschflüssigkeit oder eine Pufferflüssigkeit sein, die beispielsweise zum Lösen von Reagenzien, Abwaschen überschüssige Reaktionsteilnehmer oder zur Verdünnung der Probe dient. Die zu untersuchende Körperflüssigkeit oder eine andere flüssige Analyseprobe (wenigstens Teile davon) können ebenfalls als Spülflüssigkeit dienen.

Unter dem Begriff Primingstruktur wird die Spülflüssigkeitszugabeöffnung, die Spülflüssigkeitssammelkammer und ein diese verbindende Spülflüssigkeitskanal zusammengefasst. Die Primingstruktur kann darüber hinaus weitere Elemente, insbesondere ein Ventil zur Entlüftung der Spülflüssigkeitssammelkammer umfassen. Die Primingstruktur des erfindungsgemäßen Testelementes schließt eine Spülflüssigkeitsammelkammer ein, deren Volumen deutlich geringer ist als das Volumen der bisher in den Auswertegeräten vorgesehenen Sammelkammer, da die Spülflüssigkeitssammelkammer des Testelementes nur eine geringere Menge an Spülflüssigkeit, insbesondere die Menge eines einzigen Tests, aufnehmen muss. Bevorzugterweise ist die Spülflüssigkeitssammelkammer derart ausgebildet, dass sie lediglich das Volumen für einen Primingvorgang aufweist. Dieses Volumen beträgt in der Regel wenige Mikroliter (z.B. 20-30µl). Die Menge der Spülflüssigkeit ist gerade so groß, um Blasen aus der Dosiernadel und der Dosierpumpe zu entfernen.

Alternativ kann das Volumen der Spülflüssigkeitssammelkammer auch größer sein als das Volumen der Spülflüssigkeit, die für ein einmaliges Spülen benötigt wird. Das Kammervolumen wird in der Regel dann vergrößert sein, wenn mehrere Primingvorgänge ausgeführt werden, wenn ein Testelement für mehrere Analysen verwendet werden kann, beispielsweise wenn zwischen zwei unterschiedlichen Proben ein Spülvorgang stattfinden soll oder wenn mehrere gleiche Proben mit einem Testelement analysiert werden und ein Vermischen der Probenflüssigkeiten vermieden werden muss.

Der Spülflüssigkeitskanal und der Probenanalysekanal sind derart voneinander getrennt, dass eine Beeinträchtigung der Analyse durch die Spülflüssigkeit vermieden wird. Außerdem soll eine Flüssigkeit, die den Probenanalysekanal von der Probenzugabeöffnung in einer vorgegebenen Strömungsrichtung zu der Messzone durchströmt, nicht in den Spülflüssigkeitskanal gelangen, bevor sie in die Messzone strömt. In einer bevorzugten Ausführungsform kann eine durch den Probenanalysekanal fließende Flüssigkeit jedoch nach dem Durchströmen der Messzone in den Spülflüssigkeitskanal oder die Spülflüssigkeitssammelkammer gelangen.

In einer bevorzugten Ausführungsform des erfindungsgemäßen Analysesystems enthält die Spülflüssigkeitssammelkammer des Testelementes eine poröse, saugfähige Matrix. Durch den entstehenden Kapillareffekt wird die Spülflüssigkeit aus dem Spülflüssigkeitskanal angesaugt. Eine zuverlässige Aufnahme der Spülflüssigkeit in der Spülflüssigkeitssammelkammer wird hierdurch gewährleistet.

Bevorzugt wird an der Messzone des Testelementes eine optische Messung durchgeführt, wobei die bekannten Messverfahren zur Bestimmung eines Analyten in einer Messzone verwendet werden. Besonders bevorzugt ist die optische Messung eine Fluoreszenzmessung.

Bevorzugte Ausführungsbeispiele werden in den nachfolgenden Zeichnungen beschrieben. Die darin dargestellten technischen Merkmale können einzeln oder in Kombination verwendet werden, um bevorzugte Ausgestaltungen der Erfindung zu schaffen. Die in den Zeichnungen dargestellten Ausführungsbeispiele stellen keine Einschränkung der Allgemeinheit des in den Ansprüchen definierten Gegenstandes dar. Die Erfindung kann auf immunologische Sandwich-Assays und auch auf andere Analysen, insbesondere andere Arten von Immunoassays oder andere Arten von spezifischen Bindeassays angewandt werden. Es zeigen:
- Fig. 1: ein Prinzipschaltbild des erfindungsgemäßen Analyse- systems;
- Fig. 2: ein Prinzipschaltbild des erfindungsgemäßen Testelements;
- Fig. 3: eine schematische Darstellung einer Aufsicht einer bevor- zugten Ausführungsform des Tastelementes aus Figur 2; und
- Fig. 4: eine schematische Darstellung einer Aufsicht einer weiteren bevorzugten Ausführungsform des Testelements aus Figur 2.

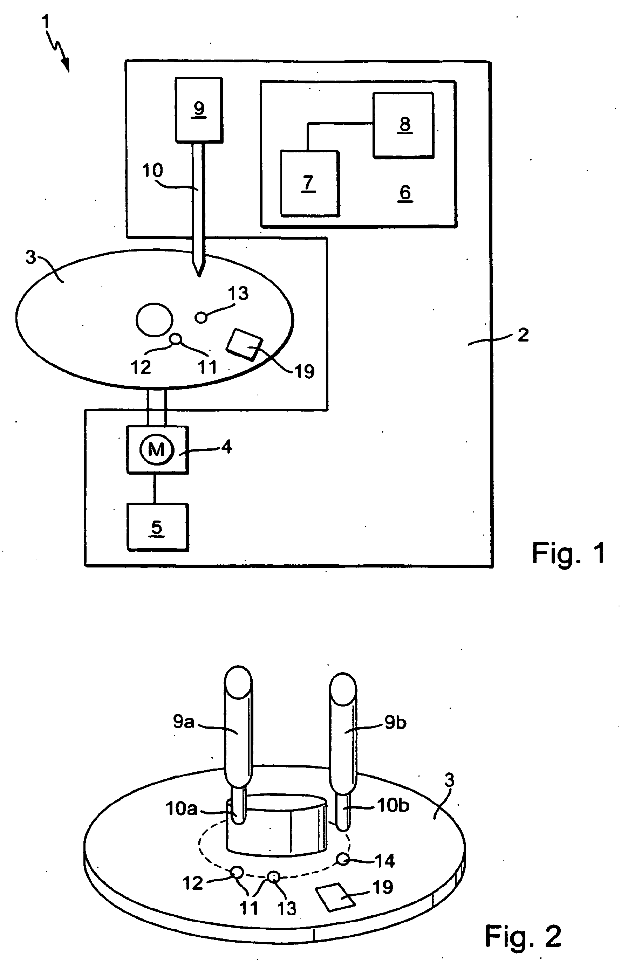

Figur 1 zeigt ein erfindungsgemäßes Analysesystem 1, das ein Auswertegerät 2 und ein steuerbares (disposibles) Testelement 3 umfasst.

Das Auswertegerät 2 hat einen Antrieb 4 für die Bewegung des Testelementes 3 um eine Rotationsachse. Durch die Rotationsbewegung des Testelements 3 wird der Transport der Probenflüssigkeit und anderer Flüssigkeiten in dem Testelement 3 extern gesteuert. Durch Steuerung des Antriebs 4 mittels einer Antriebssteuerung 5 wird die Drehrichtung und die Drehgeschwindigkeit des Antriebs geregelt. Damit lässt sich die Strömungsgeschwindigkeit, die Strömungsrichtung und die Verweildauer der Flüssigkeiten in bestimmten Abschnitten des Testelements 3 bestimmen.

Das Auswertegerät 2 schließt eine Messstation 6 ein, die eine optische Messeinrichtung 7 und eine Auswerteeinheit 8 umfasst, um eine charakteristische Messgröße für das Analyseresultat in der Probenflüssigkeit an einer Messzone des Testelements 3 zu bestimmen.

Vorzugsweise umfasst die optische Messeinrichtung 7 ein Messgerät zur Fluoreszenzmessung mit ortsaufgelöster Detektion. Bei einer zweidimensionalen Auswerteoptik wird zur Beleuchtung der Messzone des Testelements 3 und/oder zur Anregung von optisch detektierbaren Markierungen in der Testzone eine LED oder ein Laser eingesetzt. Die Detektion geschieht über eine CCD- oder eine CMOS-Optik. Selbstverständlich können auch andere im Stand der Technik bekannte optische Messverfahren zur Messung der charakteristischen Messgröße angewandt werden.

Eine Dosierstation 9 hat eine Dosiernadel 10, um eine Flüssigkeit in das Testelement 3 zu applizieren. Die Dosierstation 9 kann dazu ein oder mehrere Flüssigkeitsreservoirs (hier nicht dargestellt) umfassen, in den die zu applizierende Flüssigkeit bzw. Flüssigkeiten gelagert sind. Mittels der Dosierstation 9 wird die Probenflüssigkeit oder eine andere Flüssigkeit, beispielsweise eine Waschlösung oder ein Waschpuffer, in eine Zugabeöffnung 11 des Testelements 3 dosiert. In dem Testelement 3 nach Figur 1 ist die Zugabeöffnung 11 eine Probenzugabeöffnung 12 des (hier nicht dargestellten) Probenanalysekanals des Testelements 3.

Bei einfachen und kleinen Analysesystemen 1 wird die zu untersuchende Flüssigkeitsprobe manuell durch den Benutzer mittels einer Pipette in die bevorzugt rotationsachsennahe Probenzugabeöffnung 12 eingebracht, wobei sich das Testelement 3 zum Dosieren der Körperflüssigkeitsprobe in einer Probenaufgabeposition auf dem Auswertegerät 2 befindet. In diesem Fall dient die Dosierstation 9 nur zum Zugeben einer Waschlösung in die Zugabeöffnung 11.

Um ein möglichst genaues Volumen mit der Dosierstation 9 zu dosieren, ist es notwendig, in einem vorbereitenden Schritt die Dosierstation 9 und die Dosiernadel 10 mit einer Spülflüssigkeit zu spülen. Die durch die Dosiernadel 10 fließende Spülflüssigkeit wird in eine Spülflüssigkeitszugabeöffnung 13 des Testelements 3 entsorgt. Das Testelement 3 befindet sich dabei in einer Entsorgungsposition, bei der die Spülflüssigkeitszugabeöffnung 13 unterhalb der Dosiernadel 10 angeordnet ist. Durch dieses vorbereitende Priming wird verhindert, dass eventuell in der Dosierstation 9 oder der Dosiernadel 10 vorhandene Luftblasen zu einer Unterdosierung der zu dosierenden Flüssigkeit führen.

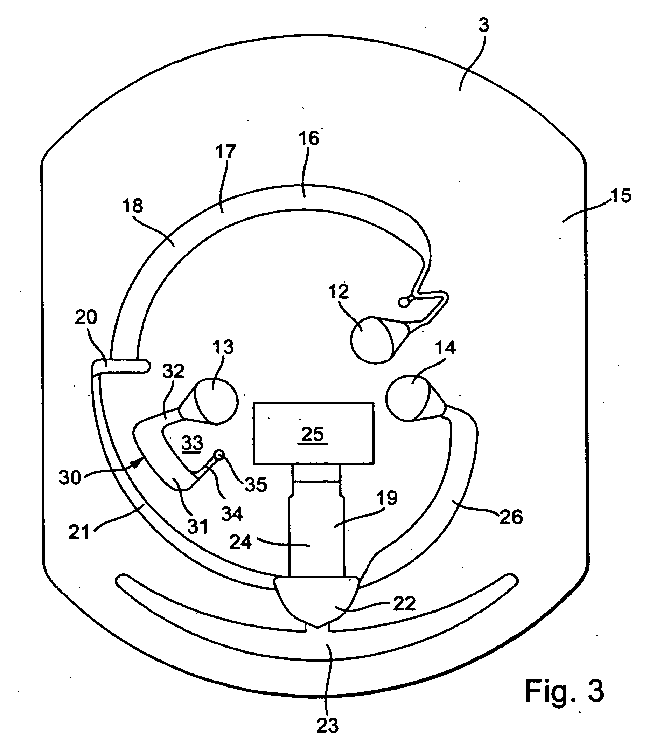

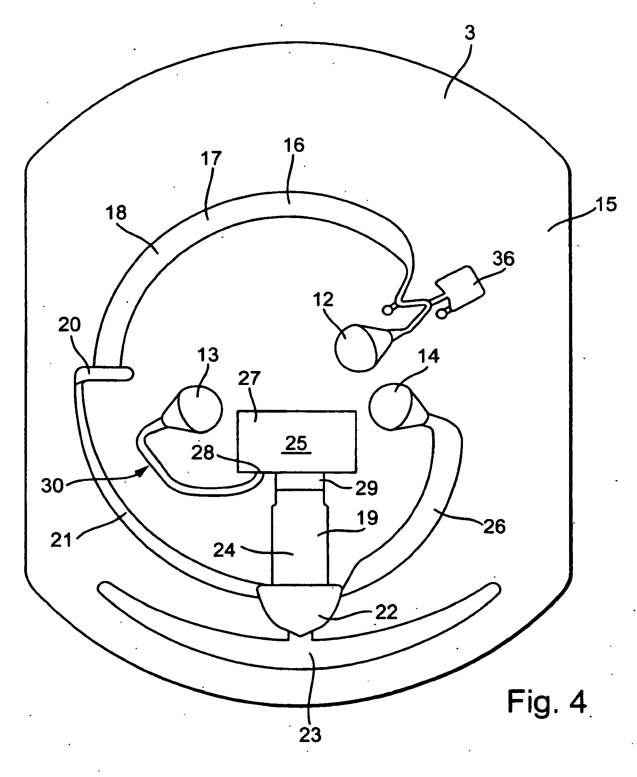

Die Spül- bzw. Primingflüssigkeit fließt durch die Spülflüssigkeitszugabeöffnung 13 in einen sich daran anschließenden Spülflüssigkeitskanal 32 und eine Spülflüssigkeitssammelkammer 31, in der die Spülflüssigkeit entsorgt wird, wie in den Figuren 3 und 4 dargestellt.

Nach diesem vorbereitenden Spülvorgang wird das Testelement 3 in seine Probenaufgabeposition gedreht, so dass die durch die Dosiernadel 10 fließende Probenflüssigkeit nun in die Probenzugabeöffnung 12 gegeben wird. Die Probenflüssigkeit fließt durch die Probenzugabeöffnung 12 in den Probenanalysekanal 16 zu einer Messzone 19, in der die Bestimmung der für das Analyseresultat charakteristischen Messgröße stattfindet.

Figur 2 zeigt einen Ausschnitt einer anderen Ausführungsform eines Analysesystems 1 mit einem Testelement 3 und zwei Dosierstationen 9a,9b mit je einer Dosiernadel 10a,10b des Auswertegerätes 2.

Das Testelement 3 weist eine Probenzugabeöffnung 12, eine Spülflüssigkeitszugabeöffnung 13 zur Aufnahme der Spülflüssigkeit und eine separate Waschlösungszugabeöffnung 14 auf. Mindestens der Abstand der Spülflüssigkeitsöffnung 13 und der Waschlösungszugabeöffnung 14, bevorzugt der Abstand der drei Öffnungen (wie gezeigt) von der Rotationsachse des Testelements 3 ist gleich, so dass alle Öffnungen (rotationsachsennah) auf einer Kreisbahn des Testelements 3 liegen.

In dieser Ausführungsform wird mittels der Dosiernadel 10a die Probenflüssigkeit in die Probenzugabeöffnung 12 und mittels der Dosiernadel 10b eine Waschlösung in die Waschlösungszugabeöffnung 14 gegeben. Beide Dosiernadeln 10a,10b werden vor der ersten Dosierung mit einer Spülflüssigkeit gespült, so dass Luftblasen aus den Dosiernadeln 10a,10b entweichen und die Nadeln gleichzeitig gereinigt werden. Die Spülflüssigkeit strömt nach dem Spülen jeweils in die Spülflüssigkeitszugabeöffnung 13. Vorteilhafterweise müssen die Dosiernadeln 10a,10b nicht bewegt werden, da alle Zugabeöffnungen auf einer Kreisbahn liegen. Eine Rotation des Testelements 3 um die Rotationsachse, die sich bevorzugt durch den Mittelpunkt bzw. das Zentrum des Testelements 3 erstreckt, ordnet die Spülflüssigkeitszugabeöffnung 13 jeweils unter der zu spülenden Dosiernadel 10a,10b an. Es ist möglich, die Waschlösung als Spülflüssigkeit zu verwenden, wobei die zum Spülen benutzte Menge der Waschlösung (genau wie sonst die Spülflüssigkeit) dann in die Primingstruktur entsorgt wird.

Die Figuren 3 und 4 zeigen jeweils eine schematische Aufsicht zweier Ausführungsformen des Testelements 3. Die beiden Testelemente 3 umfassen jeweils ein Gehäuse 15 mit einem Substrat und einer zentralen Bohrung, die als Antriebsloch zur Halterung in dem Auswertegerät 2 dient. Neben dem Substrat enthält das scheibenförmige Testelement auch in der Regel eine Deckschicht, die der Übersichtlichkeit halber nicht dargestellt ist. Grundsätzlich kann die Deckschicht ebenfalls fluidische Strukturen tragen, in der Regel wird sie jedoch nur Öffnungen für die Zugabe von Flüssigkeiten oder Ventilöffnungen aufweisen. Selbstverständlich kann anstelle der zentralen Bohrung auch eine Welle vorgesehen sein, um die das Testelement rotiert. Die Rotationsachse kann innerhalb oder außerhalb des Testelements angeordnet sein.

Das Gehäuse 15 der Testelemente 3 weist fluidische oder mikrofluidische sowie chromatographische Strukturen auf. Die Probenflüssigkeit, insbesondere Vollblut, wird dem Testelement 3 über die Probenzugabeöffnung 12 zugegeben. Ein Probenanalysekanal 16 umfasst in Strömungsrichtung an seinem Anfang die Probenzugabeöffnung 12 und an seinem Ende eine Messzone 19. Zwischen der Probenzugabeöffnung 12 und der Messzone 19 erstreckt sich ein Kanalabschnitt 17, durch den eine Flüssigkeitsprobe in der vorgegebenen Strömungsrichtung zur Messzone 19 fließt. Der Flüssigkeitstransport in dem Testelement 3 erfolgt durch Kapillarkräfte und/oder Zentrifugalkräfte.

Die Probenzugabeöffnung 12 des Probenanalysekanals 16 in Figur 4 mündet in ein in Strömungsrichtung dahinter liegendes-Reservoir 36, in das eine Flüssigkeitsprobe einströmt, bevor sie in den Kanalabschnitt 17 weiter fließt. Das Fließen bzw. die Fließgeschwindigkeit der Flüssigkeitsprobe kann durch geeignete Wahl der fluidischen Strukturen des Probenanalysekanals 16 beeinflusst werden, beispielsweise können die Dimensionen der Kanalabschnitte 17,18,21 so gewählt werden, dass das Entstehen von Kapillarkräften gefördert wird. Zusätzlich kann eine Hydrophilisierung der Oberflächen vorgenommen werden. Das Weiterströmen oder Befüllen der einzelnen Kanalabschnitte des Probenanalysekanals 16 kann auch erst nach Einwirken einer äußeren Kraft, vorzugsweise einer Zentrifugalkraft, ermöglicht werden.

Die unterschiedlichen Abschnitte des Probenanalysekanals 16 können unterschiedlich dimensioniert und/oder für unterschiedliche Funktionen vorgesehen sein. Beispielsweise kann ein Primärkanalabschnitt 18 das mit der Körperflüssigkeitsprobe reagierende Reagenzsystem enthalten, von dem bevorzugt wenigstens ein Reagenz in getrockneter oder lyophilisierter Form vorliegt. Es ist auch möglich, dass wenigstens ein Reagenz in flüssiger Form vorliegt, das durch Dosieren oder Pipettieren dem Testelement 3 zugeführt wird. Das Testelement kann dazu eine Reagenz-Zugabeöffnung aufweisen. Beispielsweise kann das flüssige Reagenz mit dem gleichen Dosiersystem appliziert werden, in dem (zuvor) ein Priming durchgeführt wurde.

Der Kanalabschnitt 17 umfasst den Primärkanalabschnitt 18, einen Kapillarstop 20 und einen Sekundärkanalabschnitt 21. Der Kapillarstop 20 kann als geometrisches Ventil oder hydrophobe Barriere ausgebildet sein. Der sich an den Kapillarstop 20 anschließende Sekundärkanalabschnitt 21 führt eine durch den Kapillarstop 20 abgemessene Probenmenge. Die durch den Kapillarstop 20 hindurchströmende Menge wird durch Zentrifugalkräfte mittels der Rotationsgeschwindigkeit des Testelementes 3 gesteuert.

Bei geeigneten Rotationsgeschwindigkeiten wird im Sekundärkanalabschnitt 21 die Abtrennung roter Blutkörperchen oder anderer zellulärer Probenbestandteile gestartet. Die in dem Kanalabschnitt 17 enthaltenen Reagenzien, die bevorzugt in getrockneter Form vorliegen, sind beim Eintritt der Probenflüssigkeit in den Sekundärkanalabschnitt 21 bereits gelöst. Bestandteile des Proben-Reagenz-Gemischs werden in den Sammelzonen 22 (Plasmasammelzone) und 23 (Erythrozytensammelzone) aufgefangen, die als Kammern ausgebildet sind.

Die sich an die Sammelzone 22 anschließende Messzone 19 schließt bevorzugt eine Messkammer 24 ein, die bevorzugt eine poröse, saugfähige Matrix enthält. In Strömungsrichtung hinter der Messkammer 24 ist eine Abfallkammer 25 angeordnet, in die die Reaktionsteilnehmer, Proben- und/oder Reagenzbestandteile nach dem Durchströmen der Messkammer 24 entsorgt werden.

Das Testelement 3 weist eine Primingstruktur 30 auf, die die Spülflüssigkeitszugabeöffnung 13, eine Spülflüssigkeitssaminelkammer 31 und einen dazwischen angeordneten Spülflüssigkeitskanal 32 umfasst. Am Ende der Spülflüssigkeitssammelkammer 31 ist ein Ventil 33 zur Entlüftung der Kammer vorgesehen, das einen Entlüftungskanal 34 und eine Entlüftungsöffnung 35 umfasst.

In dem Ausführungsbeispiel nach Figur 3 ist deutlich zu erkennen, dass die Primingstruktur 30 von allen anderen Kanalstrukturen des Testelements 3 getrennt ist. Zu erkennen ist ebenfalls, dass die Spülflüssigkeitssammelkammer 31 und die Abfallkammer 25 ("Waste"-Kammer) getrennt sind und nicht in Fluidverbindung miteinander stehen. Die Abfallkammer 25 steht bevorzugt mit der Messzone 19 derart in Fluidverbindung, dass sie die Flüssigkeit aufnimmt, die die Messzone 19 durchströmt hat.

Darüber hinaus ist in beiden Ausführungsformen des Testelementes nach Figur 3 und Figur 4 die Waschlösungszugabeöffnung 14 gezeigt, an die sich ein Waschlösungskanal 26 anschließt. Bevorzugt weist der an seinem Anfang die Waschlösungszugabeöffnung 14 einschließende Waschlösungskanal 26 an seinem Ende eine Fluidverbindung zur Messzone 19 derart auf, dass eine Waschlösung durch den Waschlösungskanal 26 in die Messkammer 24 gesaugt wird. Die Matrix der Messkammer 24 wird gewaschen und überschüssige, störende Reaktionsteilnehmer werden entfernt. Die Waschlösung gelangt anschließend ebenfalls in die Abfallkammer 25.

In der Ausführungsform nach Figur 4 weist das Testelement 3 eine Zweifunktionskammer 27 auf, die mit dem Spülflüssigkeitskanal 32 und mit der Messzone 19 bevorzugt derart in Fluidverbindung steht, dass die Zweifunktionskammer 27 sowohl Spülflüssigkeitssammelkammer 31 als auch Abfallkammer 25 ist. Eine in die Spülflüssigkeitszugabeöffnung 13 strömende Spülflüssigkeit wird durch den Spülflüssigkeitskanal 32 in die Zweifunktionskammer 27 geleitet, die dann als Spülflüssigkeitssammelkammer 31 dient. Eine Probenflüssigkeit bzw. ein Probenflüssigkeits-Reagenz-Gemisch oder eine Waschflüssigkeit, die jeweils durch die Messzone 19 strömen, werden ebenfalls in der Zweifunktionskammer 27 entsorgt, die dann die Funktion in der Abfallkammer 25 übernimmt.

Die Zweifunktionskammer 27 hat eine erste Eintrittsöffnung 28 und eine zweite Eintrittsöffnung 29. Durch die erste Eintrittsöffnung 28 strömt Flüssigkeit aus dem Spülflüssigkeitskanal 32 in die Zweifunktionskammer 27 ein. Durch die zweite Eintrittsöffnung 29 strömt der Zweifunktionskammer 27 die Flüssigkeit zu, die aus der Messzone 19 kommt.

Selbstverständlich kann die Zweifunktionskammer 27 auch nur eine Eintrittsöffnung aufweisen, durch die Flüssigkeit eintritt, die sowohl aus dem Spülflüssigkeitskanal 32 als auch aus der Messzone 19 zuströmt. In diesem Fall schließt sich an die Messzone 19 ein Abfallkanal an, der wenigstens einen mit dem Spülflüssigkeitskanal 32 gemeinsamen Abschnitt aufweist und in die Zweifunktionskammer 27 mündet.

## Patentansprüche

1. Testelement for ein Analysesystem zur Analyse einer Körperflüssigkeitsprobe auf einen darin enthaltenen Analyten
mit einem Gehäuse (15) und einem von dem Gehäuse (15) umschlossenen Probenanalysekanal (16), der eine Probenzugabeöffnung (12) und eine Messzone (18) einschließt,
wobei das Testelement (3) so ausgebildet ist, dass eine durch die Probenzugabeöffnung (12) zugeführte Körperflüssigkeitsprobe mit einem In dem Probenanalysekanal (16) vorhandenen Reagenzsystem reaglert und die Reaktion der Körperflüssigkeitsprobe mit dem Reagenzsystem zu einer Änderung der für das Analyseresultat charakteristischen Messgröße in der Messzone (19) führt,
**dadurch gekennzeichnet, dass**
eine von der Probenzugabeöffnung (12) verschiedene Spülflüssigkeitszugabeöffnung (13) und eine Spülflüssigkeitssammelkammer (31) in dem Gehäuse (15) des Testelements (3) angeordnet sind, und
dia Spülflüssigkeitszugabeöffnung (13) und die Spülflüssigkeitssammelkammer (31) über einen Spülflüssigkeitskanal (32) in Fluidverbindung miteinander stehen,
wobei der Spülflüssigkeitskanal (32) und der Probenanalysekanal (16) voneinender derart verschieden sind, dass eine durch den Spülflüssigkeitskanal (32) strömende Flüssigkeit nicht in die Messzone (19) gelangt.

2. Analysesystem zur Analyse einer Körperflüssigkeitsprobe auf einen darin enthaltenen Analyten mit Testelementen (3) nach Anspruch 1 und mit einem Auswertegerät (2), wobei
das Testelement (3) Kein jeweils ein Gehäuse (15) und einen von dem Gehäuse (15) umschlossenen Probenanalysekanal (16) aufweist, der eine Probenzugabeöffnung (12) und eine Messzone (19) einschließt, und
das Auswertegerät (2) eine Dosierstation (9) zur Dosierung einer Flüssigkelt in ein Testelement (3), das sich auf dem Auswertegerät (2) befindet, und eine Messstation (6) zum Messen einer für das Analyseresultat charakteristischen Meßgröße an der Messzone (19) eines Testelementes (3) aufweist, das sich in einer Messposition befindet,
wobei die Testelemente (3) so ausgebildet sind, dass eine durch die Probenzugabeöffnung (12) zugeführte Körperflüssigkeitsprobe mit einem in dem Probenanalysekanal (16) vorhandenen Reagenzsystem reagiert und die Reaktion der Körperflüssigkeitsprobe mit dem Reagenzsystem zu einer Änderung der für das Analyseresultat charakteristischen Messgröße in der Messzone (19) führt,
**dadurch gekennzeichnet, dass**
die Testelemente (3) eine von der Probenzugabeöffnung (12) verschiedene Spülflüssigkeitszugabeöffnung (13) und eine Spülflüssigkeitssammelkammer (31) einschließen, und
die Spülflüssigkeitszugabeöffnung (13) und die Spülflüssigkeitssammelkammer (31) über einen Spülflüssigkeitskanal (32) in Fluidverbindung miteinander stehen, wobei der Spülflüssigkeitskanal (32) und der Probenanalysekanal (16) derart voneinander verschieden sind, dass eine durch den Spülflüssigkeitskanal (32) strömende Flüssigkeit nicht in die Messzone (19) gelangt.

3. Analysesystem nach Anspruch 2, **dadurch gekennzeichnet, dass** das Testelement (3) um eine Rotationsachse rotierbar ist, die sich durch das Testelement (3) erstreckt.

4. Analysesystem nach Anspruch 3, **dadurch gekennzeichnet, dass** die Probenzugabeöffnung (12) und die Spülflüssigkeitszugabeöffnung (13) in gleichem Abstand zu der Rotationsachse angeordnet sind.

5. Analysesystem nach einem der vorhergehenden Ansprüche, **dadurch gekennzeichnet, dass** das Testelemente (3) eine Abfallkammer (25) aufweist, die mit der Messzone (19) derart in Fluidverbindung steht, dass sie Flüssigkeit aufnimmt, die die Messzone (19) durchströmt hat.

6. Analysesystem nach Anspruch 5, **dadurch gekennzeichnet, dass** das Testelement (3) eine Zweifunktionskammer (27) einschließt, die mit dem Spülflüssigkeitskanal (32) und mit der Messzone (19) derart in Fluidverbindung steht, dass sie sowohl Spülflüssigkeitssammelkammer (31) als auch Abfallkammer (25) ist.

7. Analysesystem nach Anspruch 6, **dadurch gekennzeichnet, dass** die Zweifunktionskammer (27) eine erste Eintrittsöffnung (28) aufweist, durch den Flüssigkeit aus dem Spülflüssigkeitskanal (32) in die Zweifunktionskammer (27) strömt, und eine zweite Eintrittsöffnung (29), durch den Flüssigkeit aus der Messzone (19) in die Kammer zuströmt.

8. Analysesystem nach Anspruch 6, **dadurch gekennzeichnet, dass** die Zweifunktionskammer (27) eine Eintrittsöffnung aufweist, durch den Flüssigkeit sowie aus dem Spülflüssigkeitskanal (32) als auch aus der Messzone (19) zuströmt.

9. Analysesystem nach einem der vorhergehenden Ansprüche, **dadurch gekennzeichnet, dass** die Messposition der Testelemente (3) auf dem Auswertagerät (2) gleich der Probenaufgabeposition ist.

10. Analysesystem nach einem der vorhergehenden Ansprüche, **dadurch gekennzeichnet, dass** das Testelement (3) eine Reagenz-Zugabeöffnung aufweist, durch die wenigstens ein Reagenz des Reagenzsystems in flüssiger Form dem Probenanalysekanal (16) zugeführt wird.

11. Analysesystem nach einem der vorhergehenden Ansprüche, **dadurch gekennzeichnet, dass** wenigstens ein Reagenz des Reagenzsystems In fester Form in dem Probenarralysekanal (19) enthalten ist.

12. Anelysesystem nach einem der vorhergehenden Ansprüche, **dadurch gekennzeichnet, dass** die Spülflüssigkeitssammelkammer (31) eine poröse, saugfähige Matrix enthält.

13. Analysesystem nach einem der vorhergehenden Ansprüche, **dadurch gekennzeichnet, dass** das Testelement (3) zusälzlich einen Waschlösungskanal (28) aufweist, der eine Waschlüsungszugabeöffnung (14) einschließt und eine Fluidverbindung zu der Messzone (19) hat, wobei der Waschlösungskanal (26) von dem Spüflassigkeitskanal (32) verschleden ist und eine durch den Warchlösungekanal (26) strömende Waschlösung auch die Messzone (19) durchströmt

14. Analysesystem nach einem der vorhergehenden Ansprüche, **dadurch gekennzeichnet, dass** die Messzone (19) eine Messkammer (24) einschließt die eine poröse, saugfähige Matrix enthält.

15. Verfahren zum Zugeben einer Flüssigkeit in ein Testelement mittels eines Analysesystems (1) nach Anspruch 2, das ein Auswertegerät (2) und Testelemente (3) umfasst, wobei
das Auswertegerät (2) eine Dosierstation (9) zum Dosieren einer Flüssigkeit in ein Testelement (3), das sich auf dem Auswertegerät (2) befindet, hat,
die Testelemente (3) jeweils einen Probenanalysekanal (16) aufweisen, der eine Probenzugabeöffnung (12) und eine Messzone (19) einschließt,
die Testelemente (3) eine von der Probenzugabeöffnung (12) verschiedene Spülflüssigkeitszugabeöffnung (13) und eine Spülflüssigkeitssammelkammer (31) einschließen,
die Spülflüssigkeitszugabeöffnung (13) über einen Spülflüssigkeitskanal (32) in Fluidverbindung mit der Spülflüssigkeitssammelkammer (31) steht,
umfassend den folgenden Schritt:
Spülen der Dosierstation (19) mittels einer Spülflüssigkeit wobei die Spülflüssigkeit in die Spüflüssigkeitszugabeöffnung (13) des Testelements strömt und in der Spülflüssigkeitssammeikammer (31) gesammelt wird.

16. Verfahren nach Anspruch 15, **gekennzeichnet durch** den weiteren Schritt
anschließendes Dosieren einer Flüssigkeit mittels der Dosierstation (9) in eine oder mehrere von der Spülflüssigkeitszugabeöffnung (13) verschiedene Zugabeöffnung des Testelements (3).

17. Verfahren nach Anspruch 16, **dadurch gekennzeichnet, dass** die Flüssigkeit, die in die von der Spülflüssigkeitszugabeöffnung (13) verschiedene Zugabeöffnung gegeben wird, von der Spülflüssigkeit verschieden ist.

## Claims

1. Test element for an analysis system for the analysis of a body fluid sample for an analyte contained therein,
having a housing (15) and a sample analysis channel (16) enclosed by the housing (15), the sample analysis channel (16) including a sample supply opening (12) and a measuring zone (19),
the test element (3) being adapted for reacting a body fluid sample supplied through the sample supply opening (12) with a reagent system present in the sample analysis channel (16) and whereby the reaction of the body fluid sample with the reagent system results in a change of the measurement variable characteristic for the analytical result in the measuring zone (19),
**characterized in that**
a flushing liquid supply opening (13), which is separate from the sample supply opening (12), and a flushing liquid collection chamber (31) are located in the housing (15) of the test element (3), and
the flushing liquid supply opening (13) and the flushing liquid collection chamber (31) are in fluid communication to one another via a flushing liquid channel (32),
the flushing liquid channel (32) and the sample analysis channel (16) being separate such that a liquid flowing through the flushing liquid channel (32) does not reach the measuring zone (19).

2. Analysis system for the analysis of a body fluid sample for an analyte therein, comprising test elements (3) according to claim 1 and an analysis instrument (2),
the test element (3) having a housing (15) and a sample analysis channel (16) enclosed by the housing (15), wherein the sample analysis channel (16) includes a sample supply opening (12) and a measuring zone (19), and
the analysis instrument (2) having a dosing station (9) for dosing a liquid into a test element (3), which is located on the analysis instrument (2), and having a measurement station (6) for measuring a measurement variable, which is characteristic for an analytical result at the measuring zone (19) of a test element (3), which is located in a measuring position,
the test elements (3) being adapted for reacting a body fluid sample supplied through the sample supply opening (12) with a reagent system present in the sample analysis channel (16) and whereby the reaction of the body fluid sample with the reagent system results in a change of the measurement variable characteristic for the analytical result in the measuring zone (19),
**characterized in that**
the test elements (3) include a flushing liquid supply opening (13), which is separate from the sample supply opening (12), and a flushing liquid collection chamber (31), and
the flushing liquid supply opening (13) and the flushing liquid collection chamber (31) are in fluid communication to one another via a flushing liquid channel (32), the flushing liquid channel (32) and the sample analysis channel (16) being separate such that a liquid flowing through the flushing liquid channel (32) does not reach the measuring zone (19).

3. Analysis system according to claim 2, **characterized in that** the test element (3) is rotatable around an axis of rotation which extends through the test element (3).

4. Analysis system according to claim 3, **characterized in that** the sample supply opening (12) and the flushing liquid supply opening (13) are positioned at equal distance to the axis of rotation.

5. Analysis system according to any one of the preceding claims, **characterized in that** the test element (3) has a waste chamber (25), which is in fluid communication to the measuring zone (19) in such a manner that it takes in liquid which has flowed through the measuring zone (19).

6. Analysis system according to claim 5, **characterized in that** the test element (3) includes a dual-function chamber (27), which is in fluid communication to the flushing liquid channel (32) and to the measuring zone (19) in such a manner that it serves as both flushing liquid collection chamber (31) and waste chamber (25).

7. Analysis system according to claim 6, **characterized in that** the dual-function chamber (27) has a first entry opening (28), through which liquid flows from the flushing liquid channel (32) into the dual-function chamber (27), and a second entry opening (29), through which liquid flows from the measuring zone (19) into the dual-function chamber.

8. Analysis system according to claim 6, **characterized in that** the dual-function chamber (27) has an entry opening, through which liquid enters both from the flushing liquid channel (32) and also from the measuring zone (19).

9. Analysis system according to any one of the preceding claims, **characterized in that** the measuring position of the test elements (3) on the analysis instrument (2) is identical to the sample dispensing position.

10. Analysis system according to any one of the preceding claims, **characterized in that** the test element (3) has a reagent supply opening, through which at least one reagent of the reagent system is supplied in liquid form to the sample analysis channel (16).

11. Analysis system according to any one of the preceding claims, **characterized in that** at least one reagent of the reagent system is contained in solid form in the sample analysis channel (16).

12. Analysis system according to any one of the preceding claims, **characterized in that** the flushing liquid collection chamber (31) contains a porous, absorbent matrix.

13. Analysis system according to any one of the preceding claims, **characterized in that** the test element (3) additionally has a washing solution channel (26), which includes a washing solution supply opening (14) and is in fluid communication with the measuring zone (19), the washing solution channel (26) being separate from the flushing liquid channel (32) and a washing solution flowing through the washing solution channel (26) also flowing through the measuring zone (19).

14. Analysis system according to any one of the preceding claims, **characterized in that** the measuring zone (19) includes a measuring chamber (24), which contains a porous, absorbent matrix.

15. Method for delivering a liquid into a test element using an analysis system (1) according to claim 2, which includes an analysis instrument (2) and test elements (3),
the analysis instrument (2) having a dosing station (9) for dosing a liquid into a test element (3), which is located on the analysis instrument (2),
the test elements (3) each having a sample analysis channel (16), which includes a sample supply opening (12) and a measuring zone (19),
the test elements (3) including a flushing liquid supply opening (13), which is separate from the sample supply opening (12), and a flushing liquid collection chamber (31),
the flushing liquid supply opening (13) being in fluid communication to the flushing liquid collection chamber (31) via a flushing liquid channel (32),
comprising the following step:
flushing the dosing station (19) using a flushing liquid, the flushing liquid flowing into the flushing liquid supply opening (13) of the test element and being collected in the flushing liquid collection chamber (31).

16. Method according to claim 15, **characterized by** the further step:
subsequent dosing of a liquid using the dosing station (9) into one or more supply openings of the test element (3) separate from the flushing liquid supply opening (13).

17. Method according to claim 16, **characterized in that** the liquid which is dispensed into the supply opening separate from the flushing liquid supply opening (13) is different from the flushing liquid.

## Revendications

1. Elément test pour un système d'analyse pour l'analyse d'un échantillon de liquide corporel sur un analyte contenu dans celui-ci
comprenant un boîtier (15) et un canal d'analyse d'échantillon (16) enfermé par le boîtier (15), qui inclut une ouverture d'addition d'échantillon (12) et une zone de mesure (19),
l'élément test (3) étant conçu de telle sorte qu'un échantillon de liquide corporel amené par l'ouverture d'addition d'échantillon (12) réagit avec un système réactif présent dans le canal d'analyse d'échantillon (16) et la réaction de l'échantillon de liquide corporel avec le système réactif entraîne une variation de la grandeur de mesure caractéristique du résultat de l'analyse dans la zone de mesure (19),
**caractérisé en ce**
**qu'**une ouverture d'addition de liquide de lavage (13) différente de l'ouverture d'addition d'échantillon (12) et une chambre collectrice de liquide de lavage (31) sont disposées dans le boîtier (15) de l'élément test (3), et
l'ouverture d'addition de liquide de lavage (13) et la chambre collectrice de liquide de lavage (31) sont en liaison fluidique l'une avec l'autre au moyen d'un canal de liquide de lavage (32),
le canal de liquide de lavage (32) et le canal d'analyse d'échantillon (16) étant différents l'un de l'autre, de telle sorte qu'un liquide coulant dans le canal de liquide de lavage (32) ne parvient pas dans la zone de mesure (19).

2. Système d'analyse pour analyser un échantillon de liquide corporel sur un analyte contenu dans celui-ci avec des éléments test (3) selon la revendication 1 et avec un appareil d'analyse (2),
l'élément test (3) présentant à chaque fois un boîtier (15) et un canal d'analyse d'échantillon (16) enfermé par le boîtier (15), lequel canal inclut une ouverture d'addition d'échantillon (12) et une zone de mesure (19), et
l'appareil d'analyse (2) présentant une station de dosage (9) pour le dosage d'un liquide dans un élément test (3), qui se trouve sur l'appareil d'analyse (2), et une station de mesure (6) pour la mesure d'une grandeur de mesure caractéristique du résultat de l'analyse sur la zone de mesure (19) d'un élément test (3), qui se trouve dans une position de mesure,
les éléments test (3) étant conçus de telle sorte qu'un échantillon de liquide corporel amené par l'ouverture d'addition d'échantillon (12) réagit avec un système réactif présent dans le canal d'analyse d'échantillon (16) et la réaction de l'échantillon de liquide corporel avec le système réactif entraîne une variation de la grandeur de mesure caractéristique du résultat de l'analyse dans la zone de mesure (19),
**caractérisé en ce que**
les éléments test (3) incluent une ouverture d'addition de liquide de lavage (13) différente de l'ouverture d'addition d'échantillon (12) et une chambre collectrice de liquide de lavage (31), et
l'ouverture d'addition de liquide de lavage (13) et la chambre collectrice de liquide de lavage (31) sont en liaison fluidique l'une avec l'autre par un canal de liquide de lavage (32), le canal de liquide de lavage (32) et le canal d'analyse d'échantillon (16) étant différents l'un de l'autre, de telle sorte qu'un liquide coulant dans le canal de liquide de lavage (32) ne parvient pas dans la zone de mesure (19),

3. Système d'analyse selon la revendication 2, **caractérisé en ce que** l'élément test (3) peut tourner autour d'un axe de rotation, qui s'étend à travers l'élément test (3).

4. Système d'analyse selon la revendication 3, **caractérisé en ce que** l'ouverture d'addition d'échantillon (12) et l'ouverture d'addition de liquide de lavage (13) sont disposées à la même distance de l'axe de rotation.

5. Système d'analyse selon l'une des revendications précédentes, **caractérisé en ce que** l'élément test (3) présente une chambre à déchets (25), qui est en liaison fluidique avec la zone de mesure (19), de telle sorte qu'elle reçoit du liquide qui a traversé la zone de mesure (19).

6. Système d'analyse selon la revendication 5, **caractérisé en ce que** l'élément test (3) inclut une chambre à deux fonctions (27), qui est en liaison fluidique avec le canal de liquide de lavage (32) et avec la zone de mesure (19), de telle sorte qu'elle est aussi bien chambre collectrice de liquide de lavage (91) que chambre à déchet (25).

7. Système d'analyse selon la revendication 6, **caractérisé en ce que** la chambre à deux fonctions (27) présente une première ouverture d'entrée (28), par laquelle du liquide provenant du canal de liquide de lavage (32) arrive dans la chambre à deux fonctions (27), et une seconde ouverture d'entrée (29), par laquelle du liquide provenant de la zone de mesure (19) arrive dans la chambre.

8. Système d'analyse selon la revendication 6, **caractérisé en ce que** la chambre à deux fonctions (27) présente une ouverture d'entrée, par laquelle arrive du liquide provenant aussi bien du canal de liquide de lavage (32) que de la zone de mesure (19).

9. Système d'analyse selon l'une des revendications précédentes, **caractérisé en ce que** la position de mesure des éléments test (3) sur l'appareil d'analyse (2) est identique à la position d'alimentation en échantillon.

10. Système d'analyse selon l'une des revendications précédentes, **caractérisé en ce que** l'élément test (3) présente une ouverture d'addition de réactif, par laquelle au moins un réactif du système réactif est amené sous forme liquide au canal d'analyse d'échantillon (16).

11. Système d'analyse selon l'une des revendications précédentes, **caractérisé en ce qu'**au moins un réactif du système réactif est inclus sous forme solide dans le canal d'analyse d'échantillon (16).

12. Système d'analyse selon l'une des revendications précédentes, **caractérisé en ce que** la chambre collectrice de liquide de lavage (31) contient une matrice poreuse et absorbante,

13. Système d'analyse selon l'une des revendications précédentes, **caractérisé en ce que** l'élément test (3) présente en supplément un canal de solution de lavage (26), qui inclut une ouverture d'addition de solution de lavage (14) et a une liaison fluidique avec la zone de mesure (19), le canal de solution de lavage (26) étant différent du canal de liquide de lavage (32) et une solution de lavage passant par le canal de solution de lavage (26) traversant également la zone de mesure (19).

14. Système d'analyse selon l'une des revendications précédentes, **caractérisé en ce que** la zone de mesure (19) inclut une chambre de mesure (24), qui contient une matrice poreuse et absorbante.

15. Procédé pour l'addition d'un liquide dans un élément test au moyen d'un système d'analyse (1) selon la revendication 2, qui comprend un appareil d'analyse (2) et des éléments test (3),
l'appareil d'analyse (2) ayant une station de dosage (9) pour le dosage d'un liquide dans un élément test (3), qui se trouve sur l'appareil d'analyse (2),
les éléments test (3) présentant chacun un canal d'analyse d'échantillon (16), lequel inclut une ouverture d'addition d'échantillon (12) et une zone de mesure (19),
les éléments test (3) incluant une ouverture d'addition de liquide de lavage (13) différente de l'ouverture d'addition d'échantillon (12) et une chambre collectrice de liquide de lavage (31),
l'ouverture d'addition de liquide de lavage (13) étant en liaison fluidique par un canal de liquide de lavage (32) avec la chambre collectrice de liquide de lavage (31),
comprenant l'étape suivante :
lavage de la station de dosage (19) au moyen d'un liquide de lavage, le liquide de lavage circulant dans l'ouverture d'addition de liquide de lavage (13) de l'élément test et étant collecté dans la chambre collectrice de liquide de lavage (31).

16. Procédé selon la revendication 15, **caractérisé par** l'autre étape :
dosage consécutif d'un liquide au moyen de la station de dosage (9) dans une ou plusieurs ouvertures d'addition, différentes de l'ouverture d'addition de liquide de lavage (13), de l'élément test (3).

17. Procédé selon la revendication 16, **caractérisé en ce que** le liquide, qui est entré dans l'ouverture d'addition différente de l'ouverture d'addition de liquide de lavage (13), est différent du liquide de lavage.
